# EUROPEAN PATENT SPECIFICATION

(11) **EP 1 303 544 B1**
(45) Date of publication and mention of the grant of the patent: **02.03.2011**
(21) Application number: 01946330.6
(22) Date of filing: 14.06.2001
(51) Int. Cl.: C08F 10/00, C08F 4/64, C08J 11/02, B01J 31/12, B01J 31/40, B01D 3/14

(54) **METHOD OF REDUCING FORMATION OF PRECIPITATES IN SOLVENT RECOVERY SYSTEM**
VERFAHREN ZUR REDUZIERUNG VON NIEDERSCHLAGBILDUNG IN EINEM LÖSUNGSMITTELRÜCKGEWINNUNGSSYSTEM
METHODE POUVANT DIMINUER LA FORMATION DE PRECIPITES DANS UN SYSTEME DE RECUPERATION DE SOLVANT

(30) Priority: 11.07.2000 US 613954
(43) Date of publication of application: 23.04.2003
(73) Proprietor: Union Carbide Chemicals & Plastics Technology LLC, Danbury, CT 06817-0001 (US)
(72) Inventor: ZUM MALLEN, Michael, Philip, Sugar Land, TX 77479 (US)
(74) Representative: Burford, Anthony Frederick
(86) International application number: PCT/US2001/019042
(87) International publication number: WO 2002/004529

(56) References cited:
- US-A- 5 242 549
- US-A- 5 948 212
- US-A- 5 962 361

## Description

The present invention relates to a method of making a catalyst precursor, with reduced precipitate formation in a solvent recovery system. The method enables more efficient recovery of the solvent, reduces formation of solid material in distillation column reboilers and related equipment in the solvent recovery system, and reduces the waste effluent from the system.

Various types of Ziegler-Natta catalysts useful for polymerizing α-olefins are known. Recently titanium-based Ziegler-Natta catalysts include stereoregulating catalysts that have sufficient activity to avoid the need for extraction and deashing of the resulting polymer. These high activity catalysts typically are prepared from a solid compound (procatalyst) that usually contains magnesium, titanium and halide moieties, a cocatalyst (usually an organoaluminum compound) and, when propylene is polymerized in particular, an external electron donor or selectivity control agent (SCA). The cocatalyst and selcetivity control agent may be separated added components of the catalyst composition or a neutral ligand that is complexed with the procatalyst.

A number of patents describe various mechanisms for preparing magnesium- and titanium-containing compounds that are useful as precursors for the production of procatalysts that are ultimately useful in preparing catalysts for the polymerization of α-olefins. Examples include US-A-4,442,276; US-A-4,460,701; US-A-4,540,679; US-A-4,547,476; US-A-4,816,433; US-A-4,829,037; US-A-4,927,797; US-A-US-A-4,990,479; US-A-5,028,671; US-A-5,034,361; US-A-5,066,737; US-A-5,066,738; US-A-5,077,357; US-A-5,082,907; US-A-5,106,806; US-A-5,146,028; US-A- US-A-5,151,399; US-A-5,153,158; US-A-5,229,342; US-A-5,247,031; and US-A-5,247,032 among others. Precursors are compounds that are readily converted to a procatalyst by chlorination and addition of an internal electron donor. Magnesium and titanium-containing procatalysts are preferably formed by reacting the magnesium and titanium-containing precursor compound with a tetravalent titanium halide, and an electron donor. The resulting procatalyst is separated from the reaction mixture as a solid, by filtration, optionally after precipitation, or recrystallization. Production of these precursors may also involve precipitating a solid composition from solution or otherwise forming a suspension and then recovering the solid precursor. For example, in a preferred embodiment, the precursor can be precipitated from a reaction mixture comprising an alkanol by distilling or otherwise removing the alkanol, and filtering the remaining suspension. The filtrate from the filtration typically contains a number of useful ingredients or components that require removal prior to reuse or disposal. For example, the reaction diluent used in making the precursor, such as a chlorinated hydrocarbon, is a valuable ingredient that can be recovered and recycled to the manufacturing unit.

It is known in the art to recover valuable by-products of procatalyst manufacture by subjecting the waste stream to one or more distillations, in the presence or absence of additional solvents, to recover the valuable titanium components. US-A-5,242,549 and 5,948,212 both disclose processes of recovering titanium from the waste stream of a procatalyst manufacturing process. These patents are not concerned with recovering an inert reaction diluent from the waste stream of a procatalyst precursor production unit, nor do they address the problem of preventing the formation of precipitates in a separation unit used to recover valuable by-products from the waste stream of a precursor production unit.

It would be useful to recover the valuable by-products, and to remove environmental hazardous by-products from the waste stream of a precursor production unit. A known recovery mechanism is to convey the waste stream to a distillation unit for separation of components. However, distilling the waste stream of a precursor production unit employing an alkanol for selective precipitation of the precursor can cause precipitation of solid components, especially magnesium and titanium containing species, because any remaining alkanol that had dissolved these species in the waste effluent is driven off in the distillation. Precipitation of these species causes undesirable solids accumulation in distillation column reboilers, and other related equipment.

Thus, there exists a need to provide an efficient and effective method of recovering useful ingredients that typically are present in the waste stream from a catalyst precursor manufacturing unit. In addition, there exists a need to develop a method of making a catalyst precursor more economically by enabling reuse of valuable by-products or waste effluent, and efficient disposal of waste. There also exists a need to develop a process that prevents precipitation of solid components during distillation of a waste stream from a catalyst precursor production unit, while at the same time enabling efficient recovery of valuable components in the waste stream.

According to the present invention, there is provided a method of making a catalyst precursor, said catalyst precursor being a compound that can subsequently be converted by chlorination and addition of an internal electron donor into a procatalyst for a Zeigler-Natta catalyst, comprising:
contacting at least one titanium alkoxide, a magnesium alkoxide, ethanol and at least one reaction diluent selected from the group consisting of isopentane isooctane and chlorobenzene;
removing a portion of the ethanol to precipitate a solid titanium and magnesium containing precursor component, thereby resulting in a suspension of the precursor in the at least one reaction diluent;
separating the solid titanium and magnesium containing precursor component from the suspension to form a solid precursor component and a waste stream that includes at least one reaction diluent; optionally washing and again separating the solid titanium and magnesium containing precursor component and a second or combined waste stream that includes at least one wash diluent selected from the group consisting of isopentane, isooctane, and chlorobenzene;
and recovering the one or more inert reaction diluent(s) and/or wash diluent(s) by contacting the waste stream(s) with a solubilization solvent, and subjecting the resulting stream(s) to distillation. The solubilization solvent: (i) is present in an amount sufficient to maintain the solubility of residual titanium and magnesium alkoxide species; (ii) has a boiling point higher than that of the reaction diluent(s); and (iii) is selected from octanol, decanol or cresol. Optionnally, but preferably, the solubilization solvent also does not form an azeotrope with the reaction diluent(s).

In a preferred embodiment of the invention, the solid precursor compound is washed after recovery by forming a suspension thereof with a liquid wash diluent comprising isopentane, isooctane and/or chlorobenzene, separating the washed solid precursor compound from the suspension to form a solid precursor component and a wash, waste liquid stream that preferably includes at least one liquid wash diluent comprising isopentane and/or chlorobenzene, at least one titanium alkoxide, at least one magnesium alkoxide, optionally at least one titanium chloroalkoxide and/or at least one magnesium chloroalkoxide, at least one phenolic compound, and at least one C₁₄ alkanol; contacting the waste liquid stream with a solubilization solvent; optionally combining the wash, waste liquid stream with at least one waste liquid stream including at least one reaction diluent before or after contacting with the solubilization agent; and subjecting the resulting mixture to distillation. The solubilization solvent: (i) is present in an amount sufficient to maintain the solubility of residual titanium and magnesium alkoxide species; (ii) has a boiling point higher than that of the reaction diluent(s) and/or wash liquid diluent(s); (iii) is selected from octanol, decanol or cresol; and optionally, but preferably, (iv) does not form an azeotrope with the reaction diluent(s) and/or wash solvent(s).

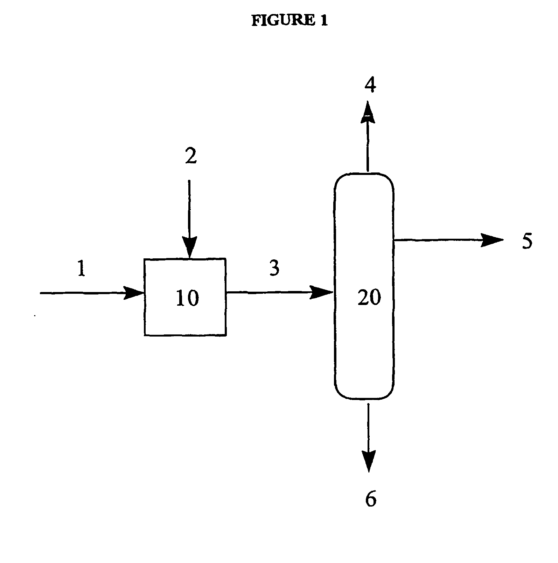

FIG. 1 illustrates a preferred separation unit useful in the present invention.

The method of the present invention is for removing and recovering inert diluents and/or wash solvents from waste streams formed in the production of Ziegler-Natta procatalyst precursors containing titanium moieties. The solubilization solvent is one that: (a) is capable of maintaining the solubility of any potential precipitates that otherwise would form without its addition; (b) has a boiling point higher than all of the light components removed by distillation; and optionally, but preferably, (c) does not form an azeotrope with any of the light component(s) of the waste stream.

More specifically, the solubilization solvent is selected from octanol, decanol and cresol. An especially preferred solubilization solvent is octanol.

The purpose of the solubilization solvent is to enable separation of the inert diluent and/or wash diluent or other light components of the waste stream without causing substantial precipitation of solids. By "substantial precipitation" it is preferred that the amount of precipitates formed is reduced by at least 50 percent when compared to a waste stream with no added solubilization solvent. Most preferably, however, no precipitates are formed.

Distillation of the mixture that contains the waste stream from the catalyst precursor production unit plus the solubilization solvent results in separation of the reaction/wash diluent from most of the other mixture components including the separation solvent without the formation of insoluble components. Although the solubilization solvent may later be separated from the remaining mixture components, in preferred practice the solubilization solvent remains with the bottom mixture as it continues to waste or to further processing. The recovered reaction diluent and/or wash solvent may undergo further processing to remove any azeotropic co-solvents (for example, C₁₋₄ alkanols) via molecular sieve or other methods known to those skilled in the art. The benefit according to the invention is the reduction in volume of the remaining bottoms allowing further recovery of metal salts, or disposal and recovery of substantial quantities of the light components.

Most preferably, the reaction diluent and wash diluent comprises a combination of isopentane and chlorobenzene. Such liquid substances are alternatively referred to herein as "light component(s)".

The precipitated materials can form from the remaining components in the waste stream. The waste stream from a precursor production unit may contain, in addition to the above-mentioned diluent and/or wash solvent, titanium alkoxides, titanium halides, titanium halide alkoxides, magnesium alkoxides, magnesium halides, magnesium halide alkoxides, phenolic compounds, and alkanols. In addition, the waste stream may contain partially reacted components obtained by partial or incomplete reaction of the titanium alkoxides, titanium halides, titanium halide alkoxides, magnesium alkoxides, magnesium halides, magnesium halide alkoxides, phenolic compounds, and alkanols.

The titanium alkoxide is titanium ethoxide, the titanium halides preferably are titanium tetrachlorides, and the titanium halide alkoxides preferably are titanium chloro ethoxides. The magnesium alkoxide is magnesium ethoxide, the magnesium halide alkoxides preferably are magnesium chloro ethoxides, and the magnesium halides preferably are trace amounts of magnesium and chlorine-containing species. Preferred alkanols and phenolic compounds are those preferred components discussed above with reference to the manufacture of the catalyst precursor.

Simple distillation of such waste streams results in the formation of substantial amounts of undesirable solid material, particularly in the distillation column reboilers. This solid material has the undesirable consequence of coating column reboiler sections, clogging the system or otherwise reducing the throughput and/or heat transfer in the column bottoms. Without wishing to be bound by any theory, the present inventor believes that it is likely that attempts at simple distillation will cause volatile light components, particularly C₁₋₄ alkanols (such as ethanol) to distill overhead either azeotropically or otherwise with the desirable reaction diluent and/or wash solvent. This in turn is believed to reduce the solubility of the remaining titanium, magnesium and/or chloride containing species in the bottoms section of the distillation zone, which in turn results in the formation of the foregoing undesirable solid materials.

The process of the invention, in a preferred embodiment, comprises the addition of a solubilization solvent , selected from octanol, decanol or cresol, to a product mixture comprising isopentane and/or chlorobenzene in mixture with at least some titanium ethoxide, titanium chloroalkoxide, magnesium ethoxide and magnesium chloroalkoxide, a phenolic compound and ethanol. The resulting mixture, including the solubilization solvent preferably is passed to a distillation zone which produces a split wherein the reaction diluent or other light component (i.e. chlorobenzene or isopentane) along with ethanol resulting from the precursor preparation are the distillate product and a bottoms product includes the remainder of the mixture, including solubilization solvent.

Enough solubilization solvent should be supplied to provide equivalent solid solubility to that of the light alcohol species (especially ethanol) in solution. There is no defined maximum amount, but for practical purposes, the quantity should be kept close to the minimum amount required to achieve solubility of solids under use conditions. This will limit the total amount of solubilizing solvent added which will eventually contribute to the total waste quantity, or to the total amount of solvent which would be later processed.

Suitable precursor production techniques to which the present process may be applied, include any known process involving the foregoing reagents. According to one suitable process, the procatalyst precursor is produced in a two-step synthesis initially involving the reaction of a magnesium ethoxide, and a titanium tetraethoxide, with a phenol, or a halo-, C₁₋₅ alkyl-, C₁₋₅ alkoxy- or di(C₁₋₅ alkyl)amido- substituted phenol.

Preferably, the phenolic compound is selected from phenol or activating group-substituted phenols. The expression "activating group" as it is used in this context, denotes a ring carbon atom substituent free from active hydrogen atoms that is ortho-para directing relative to further aromatic ring substitution and which is generally but not invariably electron donating. Specifically preferred activating groups include: methyl, ethyl, isopropyl, t-butyl, methoxy, ethoxy, butoxy, amyloxy, chloro, bromo, dimethylamino and diethylamino. Particularly preferred phenolic compounds useful as an initial reactant include phenol, p-cresol, o-cresol, 3-methoxyphenol, e-dimethylaminophenol, 2,6-dimethylphenol and 2,6-di-t-butyl-4-methylphenol. A particularly preferred phenolic compound is o-cresol.

The initial reaction typically takes place in an inert reaction diluent by contacting magnesium alkoxide, titanium alkoxide and the phenolic compound at an elevated temperature. A reaction diluent that is inert towards the reactants and has a relatively high boiling point so as to be a liquid during the contacting stage can be used, namely isopentane, isooctane and/or chlorobenzene. Chlorobenzene is particularly preferred. The temperature at which the ingredients are reacted typically is within the range of from 60°C to 130°C at a pressure sufficient to maintain the reaction mixture in a liquid phase. The initial product preferably is a complex of the formula (I):

Mg₃Ti(OEt)₈X₂ (I)

wherein R is as previously defined, and X is the phenolic anion derivative formed by removal of a proton from the corresponding phenolic compound reactant. This product usually is a clear solution in the reaction diluent employed in its production.

The initial complex then is preferably contacted with a magnesium halide alcoholate, preferably a hexalcoholate, in which the alcohol moieties are of the formula ROH where R is as previously defined, and halide is preferably chloride or bromide, most preferably, chloride. The initial complex and the magnesium halide alcoholate are mixed in an inert reaction diluent that is the same as the diluent used in the production of the initial complex or is different by virtue of the addition of a co-diluent or by diluent exchange. Preferably, the diluent is the same and the second synthetic procedure comprises the addition of the magnesium halide alcoholate to the product mixture containing the initial complex.

The reactants preferably are contacted and heated at a relatively mild temperature, for example, up to 100°C, until a clear solution is obtained and then heated at a higher temperature, from 110°C to 140°C, for example, to remove by-product alkanol from the reaction mixture, typically as an azeotrope with a portion of the reaction diluent. This alkanol removal is accompanied by the formation of opaque, spheroidal particles and typically alkanol is removed until the production of such particles ceases.

The solid precursor materials then is separated from the reaction mixture by any suitable means, including but not limited to, decantation, filtration, and centrifugation. Preferably, the solid material is filtered, most preferably under the impetus of pressure. The filtered solids then can be washed at least once with one or more solvents, such as monochlorobenzene. These wash solvents then can be removed by any means, but preferably are removed by blowing an inert gas through the filter cake. The dried filter cake then can be subjected to drying to produce a dry procatalyst precursor, and the wash liquid combined with any waste diluent from the previous steps, if any.

Alternatively, the solid precursor materials can be separated from the reaction solution or slurry by any means capable of separating a solid from a liquid. For example, the mixture containing the magnesium and titanium-containing precursor of the present invention can produce the solid, substantially dry high activity olefin polymerization procatalyst precursor by conventional methods such as impregnation, spray drying or spray cooling. Spray drying processes are well known in the art and are described, for example, in US-A-5,034,361 and US-A-4,771,024. The solution containing the magnesium and titanium-containing precursor usually is passed through a suitable atomizer to produce a spray or dispersion of droplets of the liquid mixture, a stream of hot gas such as nitrogen is arranged to contact the droplets to evaporate the solvent and the resulting solid product is collected. Atomization of the solution typically takes place in the absence of water or oxygen and nozzle atomizers or spinning disk atomizers are usually employed.

The foregoing process, regardless of the method for recovering the solid precursor, results in generation of a waste stream containing magnesium alkoxide, titanium alkoxide, a reaction diluent or waste wash diluent and ethanol by-product.

In another suitable technique, the procatalyst precursor can be produced by contacting a magnesium ethoxide, a titanium ethoxide, a titanium halide, a phenolic compound and ethanol. Preferred phenolic compounds are those that have been previously defined.

The foregoing reactants are preferably contacted in an inert reaction diluent, such as isopentane, isooctane or chlorobenzene. Highly desirable precursors result by combining the respective reagents in the following molar amounts:

3Mg(OEt)₂ + x(Ti(OEt)₄) + y(TiCl₄) + z(o-cresol) +n EtOH

wherein y is more than 0.1 but less than 0.8, preferably more than 0.3 but less than 0.5,
(x + y) is more than 0.2 but less than 3, preferably more than 0.5 but less than 2,
z is more than 0.05 but less than 3, preferably more than 0.1 but less than 2, and
n is more than 0.5 but less than 9, preferably more than 2 but less than 5.

The initial interaction of the reactants in the reaction diluent takes place in a non-gaseous state at a moderate reaction temperature. Suitable reaction temperatures are from 30°C to 120°C, preferably from 35°C to 90°C. This initial heating usually results in the formation of a generally clear solution. This solution then can be heated to a higher temperature to remove the C₁₋₄ alkanol, ethanol in the preferred embodiment, typically as an azeotrope with a portion of the inert diluent. The temperature of this second heating will depend in part on the boiling point of any azeotrope containing alkanol that is formed. Typical heating temperatures are from 70°C to 120°C, preferably from 85°C to 110°C. Removing the alcohol usually results in the formation of a procatalyst precursor in the form of solid opaque, spheroidal particles. This process of making the precursor is a most preferred embodiment of the invention since it will yield a waste stream that, when heated to recover the inert diluent, may and often will precipitate a solid component.

In another another suitable technique for preparing a procatalyst precursor, a magnesium ethoxide, a titanium ethoxide and a phenolic compound are contacted at an elevated temperature in an inert diluent such as isopentane, isooctane or chlorobenzene. Suitable magnesium alkoxides, titanium alkoxides and phenolic compounds are those previously defined for the earlier disclosed preparations.

The procatalyst precursor that results preferably corresponds to formula (II):

Mg₃Tiₘ(OEt)_{n'}(X)ₚ (II)

wherein R and X are as previously defined;

0.5 S m ≤ 2.0;

0 ≤ p ≤ 2.0, and

n' = (6 + (4m) - p).

A more preferred procatalyst precursor corresponds to the formula (III):

Mg₃Ti(OEt)₈X₂ (III)

wherein R and X are as previously defined.

Preferably, in this embodiment the compounds are contacted at an elevated temperature and at a pressure sufficient to maintain the reaction mixture in a non-gaseous state. Suitable temperatures are from 50°C to 110°C. The contacting usually is conducted in a suitable reactor and contact is facilitated by conventional techniques such as shaking, stirring or refluxing. Desirably sufficient magnesium alkoxide is provided so that the resulting solution of complex alkoxide compound has from 1 percent by weight to 6 percent by weight of magnesium. Highly desirably, the reagents include magnesium diethoxide and titanium tetraethoxide. The reagents are preferably combined according to the following molar amounts:

x' (phenolic compound) + y' Mg(OEt)₂ + z' Ti(OEt)₄,

wherein: x' is a number from 0 to 2,
y' is a number from 3 to 4.5, and
z' is a number from 0.5 to 1.5.

The product mixture that results is a solution whose viscosity varies from "runny" to viscous depending upon the particular diluent employed and the quantity thereof as well as the ratio of starting materials employed. A certain quantity of alkanol is believed to be formed in the process as a by-product by ligand exchange with the phenolic compound.

The procatalyst precursor can be recovered from the foregoing mixture by any suitable technique and separated from the liquid diluent thereby resulting in a waste stream.

Another technique for preparing a procatalyst precursor involves contacting a magnesium ethoxide, a titanium ethoxide, a titanium tetrahalide compound, and a borate ester in an ethanol containing diluent. The halide moieties of the titanium tetrahalide preferably are chloride or bromide with chloride being particularly preferred.

The resulting precursor preferably corresponds to the following formula (IV):

Mg₃Ti₂(OEt)₁₄ (IV)

The contacting of magnesium, titanium and boron compounds takes place in the presence of an ethanol containing diluent at an elevated temperature and at a pressure sufficient to maintain the reaction mixture in a non-gaseous state. Suitable reaction temperatures are from 20°C to 180°C, but preferably are from 50°C to 90°C. The contacting is conducted in a suitable reactor and is facilitated by conventional techniques such as shaking, stirring or refluxing. The reagents are combined in the following preferred molar quantities:

3Mg(OEt)₂ + 2Ti(OEt)₄ + 1.5B(OEt)₃

The product obtained is a crystalline alcoholate preferably corresponding to the formula (V):

Mg₃Ti₂(OEt)₁₄ n'(EtOH) (V)

n' is a number of from 0 to 6.

In this method of preparation of the precursor, the trialkylborate preferably remains in the mother liquor and may contribute to solids formation upon distillation. The trialkylborate preferably is provided to the reaction mixture in an amount from 0.1 mole to 2 moles per mole of titanium, more preferably from 0.5 mole to 1 mole per mole of titanium. The magnesium ethoxide preferably is provided in an amount of from 0.5 mole to 4 moles per mole of titanium. Quantities of magnesium ethoxide from 1 mole to 2 moles per mole of titanium are preferred.

The resulting precursor compound is recovered from the product mixture by well known methods such as filtration or decantation. The alcoholate then is converted to the complex alkoxide compound by removal of ethanol. The ethanol can be removed by conventional procedures, normally by heating. A particularly satisfactory method for ethanol removal is by an azeotropic distillation with a hydrocarbon or halohydrocarbon solvent.. The solvents are one or more of isopentane, isooctane and chlorobenzene. The azeotropic solvent typically is added in a molar quantity in excess of the ethanol present and the resulting mixture then is heated to remove the ethanol. The complex alkoxide compound that results forms a clear solution in the excess hydrocarbon or halohydrocarbon at the boiling temperature of the azeotrope. It may be crystallized by removal of alcohol from the mixture to form solid opaque, spheroidal particles. These solid particles then can be separated from the mixture in accordance with any of the previously disclosed procedures.

This waste liquid resulting from the procatalyst precursor production according to any of the foregoing techniques or from a washing process may be subjected to the method of diluent or solvent recover according to the present invention. Mixtures of one or more solubilization solvents may also be used in the separation process. Preferably, the normal boiling point of the solubilization solvent is higher than that of the diluent or other light component to be recovered.

The method of the invention is more particularly illustrated by reference to FIG. 1, where a waste liquid stream emanating from an olefin polymerization procatalyst precursor production unit is denoted by 1. More preferably, this waste liquid stream constitutes a complex mixture of an inert reaction diluent and/or wash diluent, titanium ethoxides, magnesium ethoxides, titanium halides, phenolic compounds, and ethanol. In practice, there may be more than one waste streams from a production unit, and multiple production units contributing to waste stream 1. For example, a first stream might contain predominately reaction diluent and a second stream might contain predominately a wash diluent. Each stream could be treated independently in the manner described herein or combined for treatment.

The process stream is combined with the solubilizing solvent (2) in a mixing zone (10) which may be a tank or may be direct mixing in a line or pipe of a polyolefin procatalyst precursor process waste stream (1). Once combined, the combined stream containing at least the waste stream and the solubilizing agent enters the distillation zone (20) from which an overhead stream (4), middle distillate stream (5) and bottoms stream (6) emanate. Additional recovered streams could be employed at the discretion of the operator. Downsteam processes for impurity removal (such as molecular sieves) could be included for the exiting product streams (4) and (5). Exiting product streams (4) and (5) then may be recycled to the polymerization catalyst precursor production unit for reuse, or it may be stored and used for other purposes, or sold. The bottoms stream (6) includes a concentrated mixture, including the solubilization solvent added as stream (2) and the solids that otherwise would form a precipitate.

The skilled artisan will appreciate that overhead distillate stream (4) and middle distillate stream (5) may not be utilized under all operation conditions. For example, if isopentane is the diluent that is desired to be recovered, this diluent can be removed from the column via stream (4), which then can be subsequently treated to recover the isopentane. If monochlorobenzene is the diluent that is to be recovered, however, middle distillate stream (5) is employed. Skilled artisans are capable of determining whether one or both of streams (4) and (5) are required, depending on the nature of the components to be recovered from the waste stream.

The distillation zone (20) is shown as a single column, but could alternatively be multiple columns. A suitable column is a packed column of from 2 to 4 sections, each of which has multiple stages. Other types of multiple stage columns also are suitable, depending upon the composition of the waste stream, the potential precipitate, and the solubilization solvent to be employed. Typical operation of the distillation zone depends on the diluent to be recovered. For halohydrocarbon recovery, such as chlorobenzene, the column may operate at about 11 psig (180 kPa) at the base and a temperature varying from 120°C at the top to 170°C at the bottom of the column. For hydrocarbon recovery, such as isopentane, the column may operate at about 35 psig (340 kPa) at the base and a temperature varying from about 67°C at the top to 172°C at the bottom of the column. Column pressure may be adjusted upward or downward, which a concurrent increase or decrease in the noted temperature profile. In actual operation, the process may employ pumps, reboilers, rectifiers and/or other mechanical features (not depicted) as will be apparent to one of ordinary skill in this art.

## Claims

1. A method of making a catalyst precursor, said catalyst precursor being a compound that can subsequently be converted by chlorination and addition of an internal electron donor into a procatalyst for a Ziegler-Natta catalyst, comprising:
contacting at least a titanium ethoxide, a magnesium ethoxide, ethanol, and at least one reaction diluent selected from the group consisting of isopentane, isooctane, and chlorobenzene;
removing a portion of the ethanol to precipitate a solid titanium and magnesium containing precursor component, thereby resulting in a suspension of the precursor in at least one reaction diluent;
separating the solid titanium and magnesium containing precursor component from the suspension to form a solid precursor component and a waste stream that includes at least one reaction diluent;
optionally washing and again separating the solid titanium and magnesium containing precursor component to form a solid precursor component and a second or combined waste stream that includes at least one wash diluent selected from the group consisting of isopentane, isooctane, and chlorobenzene;
and recovering the one or more inert reaction diluent(s) and/or wash diluent(s) by contacting the waste stream(s) with a solubilization solvent, and subjecting the resulting stream(s) to distillation,
wherein the solubilization solvent: (i) is present in an amount sufficient to maintain the solubility of residual titanium and magnesium alkoxide-containing species; (ii) has a boiling point higher than the one or more reaction diluent(s) and/or wash diluent(s); and (iii) is selected from octanol, decanol, or cresol.

2. The method according to claim 1, wherein the solubilization solvent also does not form an azeotrope with the recovered reaction diluent(s) and/or wash diluent(s).

3. The method according to claim 1 wherein the solubilization solvent is octanol.

## Patentansprüche

1. Verfahren zur Herstellung eines Katalysatorvorläufers, wobei der Katalysatorvorläufer eine Verbindung ist, die anschließend durch Chlorierung und Zugabe eines internen Elektronendonators in einen Prokatalysator für einen Ziegler-Natta-Katalysator umgewandelt werden kann, mit den folgenden Schritten:
Inkontaktbringen von mindestens einem Titanethoxid, einem Magnesiumethoxid, Ethanol und mindestens einem Reaktionsverdünnungsmittel, das aus der aus Isopentan, Isooctan und Chlorbenzol bestehenden Gruppe ausgewählt ist;
Entfernen eines Teils des Ethanols, um eine feste, Titan und Magnesium enthaltende Vorläuferkomponente auszufällen, was zu einer Suspension des Vorläufers in mindestens einem Reaktionsverdünnungsmittel führt;
Abscheiden der festen, Titan und Magnesium enthaltenden Vorläuferkomponente aus der Suspension, um eine feste Vorläuferkomponente und einen Abwasserstrom zu bilden, der mindestens ein Reaktionsverdünnungsmittel enthält;
gegebenenfalls Waschen und erneut Abscheiden der festen, Titan und Magnesium enthaltenden Vorläuferkomponente, um eine feste Vorläuferkomponente und einen zweiten bzw. kombinierten Abwasserstrom zu bilden, der mindestens ein Waschflüssigkeitsverdünnungsmittel enthält, das aus der aus Isopentan, Isooctan und Chlorbenzol bestehenden Gruppe ausgewählt ist;
und Rückgewinnen der ein oder mehr inerten Reaktionsverdünnungsmittel und/oder Waschflüssigkeitsverdünnungsmittel, indem der/die Abwasserstrom/Abwasserströme mit einem Solubilisierungslösungsmittel in Kontakt gebracht wird/werden und der/die resultierende Strom/resultierenden Ströme einer Destillation unterzogen wird/werden,
wobei das Solubilisierungslösungsmittel: (i) in einer ausreichenden Menge vorliegt, um die Löslichkeit der restlichen, Titan und Magnesiumalkoxid enthaltenen Arten aufrechtzuerhalten; (ii) einen höheren Siedepunkt hat als die ein oder mehr Reaktionsverdünnungsmittel und/oder Waschflüssigkeitsverdünnungsmittel; und (iii) aus Octanol, Decanol oder Kresol ausgewählt ist.

2. Verfahren nach Anspruch 1, wobei das Solubilisierungslösungsmittel auch kein Azeotrop mit dem/den rückgewonnenen Reaktionsverdünnungsmittel(n) und/oder Waschflüssigkeitsverdünnungsmittel(n) bildet.

3. Verfahren nach Anspruch 1, wobei das Solubilisierungslösungsmittel Octanol ist.

## Revendications

1. Procédé de préparation d'un précurseur de catalyseur, lequel précurseur de catalyseur est un composé qui peut être ultérieurement converti, par chloration et addition d'un donneur interne d'électrons, en un procatalyseur d'un catalyseur de Ziegler-Natta, lequel procédé comporte les étapes suivantes :
- mettre en contact, au moins, un éthylate de titane, un éthylate de magnésium, de l'éthanol, et au moins un diluant de réaction choisi dans l'ensemble constitué par de l'isopentane, de l'isooctane et du chlorobenzène ;
- chasser une partie de l'éthanol pour faire précipiter un composant précurseur solide contenant du titane et du magnésium, ce qui donne une suspension de précurseur dans au moins un diluant de réaction ;
- séparer de cette suspension le composant précurseur solide contenant du titane et du magnésium, ce qui donne un composant précurseur solide et un courant de rebut qui contient au moins un diluant de réaction ;
- en option, laver et séparer à nouveau le composant précurseur solide contenant du titane et du magnésium, ce qui donne un composant précurseur solide et un deuxième courant de rebut ou un courant de rebut mixte, qui contient au moins un diluant de lavage choisi dans l'ensemble constitué par de l'isopentane, de l'isooctane et du chlorobenzène ;
- et récupérer le ou les diluant(s) de réaction et/ou diluant(s) de lavage inerte(s) en mettant le ou les courant(s) de rebut en contact avec un solvant de solubilisation et en soumettant le ou les courant(s) ainsi obtenu(s) à une distillation ;
étant entendu que ce solvant de solubilisation :
i) est utilisé en une quantité suffisante pour que les résidus d'espèces contenant des alcoolates de titane et de magnésium restent à l'état dissous ;
ii) présente un point d'ébullition supérieur à celui ou ceux du ou des diluant(s) de réaction et/ou diluant(s) de lavage ;
iii) et est choisi parmi de l'octanol, du décanol et du crésol.

2. Procédé conforme à la revendication 1, dans lequel le solvant de solubilisation, en outre, ne forme pas d'azéotrope avec le ou les diluant(s) de réaction et/ou diluant(s) de lavage récupéré(s).

3. Procédé conforme à la revendication 1, dans lequel le solvant de solubilisation est de l'octanol.
